# EUROPEAN PATENT APPLICATION

(11) **EP 2 367 088 A1**
(43) Date of publication of application: **21.09.2011**
(21) Application number: 11157384.6
(22) Date of filing: 08.03.2011
(51) Int. Cl.: G06F 1/16

(54) **Retaining device of information browsing device and display control method**

(30) Priority: 16.03.2010 JP 2010059683
(71) Applicant: Konica Minolta Business Technologies, Tokyo, Tokyo 100-0005 (JP)
(72) Inventor: Eguchi, Tatsuya, Tokyo 100-0005 (JP); Shibata, Tetsuhiro, Tokyo 100-0005 (JP); Suka, Tsutomu, Tokyo 100-0005 (JP); Hyodo, Keiichiro, Tokyo 100-0005 (JP); Inoue, Masayuki, Tokyo 100-0005 (JP); Takamura, Shunsuke, Tokyo 100-0005 (JP)
(74) Representative: Alton, Andrew

(57) **Abstract**

A retaining device, having: a structure to retain one or a plurality of information browsing devices having a display section and a control section, wherein the structure is fixed onto a main body or an accessory of a processing apparatus to process a document to be displayed on the information browsing device, and configured in a way that at least a portion of the display section of the information browsing device plugged in a front can be seen squarely from a front of the display section.

## Description

This application is based on Japanese Patent Application No. 2010-059683 filed on March 16, 2010, in Japanese Patent Office, the entire content of which is hereby incorporated by reference.

### TECHNIICAL FIELD

The present invention relates to a retaining device to retain an information browsing device and information display control method of the information browsing device.

### BACKGROUND OF THE INVENTION

In recent years, a portable information browsing device such as electronic paper has become popular and used in a variety of forms. For example, instead of outputting a material for a meeting as a paper medium, electronic data of the material is transmitted to an information browsing device and displayed on a display section so as to reduced consumption of the resources.

To use the above configuration, since the information browsing device has to be stored in a condition to enable transmission and reception of the electronic data, a retaining device (cradle) to which the information browsing device can be plugged and unplugged is provided so that data transmission is conducted between the retaining device and the information browsing device and the information browsing device is charged by electric power supplied from the retaining device (As to the cradle, for example, refer to the Patent Document 1: Unexamined Japanese Patent Application Publication No. 2009-245139).
Patent Document 1: Unexamined Japanese Patent Application Publication No. 2009-245139

As described in the Patent Document 1, the retaining device to retain a portable terminal device is know, however, in case of the information browsing device such as an electronic paper having a large area occupied by a display section, the display section may be damaged by contacting with another display section depending on a structure of the retaining device. Also, in a structure of the retaining device to enclose the whole image browsing device, a function of the display section having the large area cannot be used effectively.

Also, in case whether the material of the meeting and so forth is printed on a paper medium or displayed on the display section of the image browsing device, is able to optional, a plurality of the information browsing devices have to be placed near a processing apparatus (in the above case, an image forming apparatus to print the material) to process the electronic data. However, in the past since there have not been the retaining device to retain the information browsing device near the processing apparatus, the plurality of the information browsing devices had to be laid horizontally or vertically. In case of laying horizontally a space has to be saved and in case of placing vertically, there was a possibility that the information browsing devices contact each other or fall and are damaged.

Also, in the above type of usage, it is preferable that the operation of the information browsing device is controlled in conjunction with the processing apparatus such as the image forming apparatus, however in the past there have not been the retaining device to retain the information browsing device in a state where the processing apparatus coordinates. Thus since a user themself had to operate to transmit the electronic data from the processing apparatus to the information browsing device, there was a problem of inconvenience.

The present invention has one aspect to solve the above problems and an object of the present invention is to provide a retaining device to retain the information browsing device in conjunction with an apparatus to process electronic data enabling an excellent visibility of the information browsing device, and a display control method.

To achieve the above object, the retaining device reflecting one aspect of the present invention is to provide a retaining device, having: a structure to pluggably retain one or a plurality of information browsing devices having a display section and a control section, wherein the structure is fixed onto a main body or an accessory of a processing apparatus to process a document to be displayed on the information browsing device, and configured in a way that at least a portion of the display section of the information browsing device retained by the structure so as to locate in a front can be seen from an anterior position of the display section.
Also the present invention is to provide a display control method using a retaining device to detachably retain one or a plurality of information browsing devices having a display section, wherein the retaining device is fixed onto a main body or an accessory of a processing apparatus to process a document to be displayed on the information browsing device, comprising; specifying the information browsing device, retained by the structure so as to locate in the front when viewing the display section from a front, by observing plugging and unplugging of the information browsing device via the retaining device in a first step and displaying the specific information acquired from the processing apparatus on the display section of the information browsing device plugged in the front in a second step.

### BRIEF DESCRIPTION OF THE DRAWINGS

Fig. 1 is a perspective view schematically showing a configuration of an information browsing system related to an example of the present embodiment.
Fig. 2 is a perspective view schematically showing another configuration of an information browsing system related to an example of the present embodiment.
Fig. 3 is a block diagram showing a configuration of an information browsing device related to an example of the present embodiment.
Fig. 4 is a block diagram showing a configuration of a retaining device related to an example of the present embodiment.
Fig. 5 is a flow chart showing an operation (operation when the information browsing device is plugged) of a retaining device related to an example of the present embodiment.
Fig. 6 is a flow chart showing an operation (operation when information is displayed on the information browsing device) of a retaining device related to an example of the present embodiment.
Fig. 7 is a flow chart showing an operation (operation when a new information browsing device is plugged) of a retaining device related to an example of the present embodiment.
Fig. 8 is a flow chart showing an operation (operation when a information browsing device is unplugged) of a retaining device related to an example of the present embodiment.
Fig. 9a and 9b are perspective views schematically showing an operation when an information browsing device is plugged onto the retaining device of Fig. 1.
Fig. 10a and 10b are perspective views schematically showing an operation when a plurality of information browsing devices are plugged onto the retaining device of Fig. 2.
Fig.11 is a perspective view schematically showing an operation when a new information browsing device is plugged.
Fig.12 is a perspective view schematically showing an operation when an information browsing device is unplugged.
Fig.13a and 13b are perspective views showing another configuration of a retaining device related to an example of the present embodiment.
Fig. 14 is a perspective view showing yet another configuration of a retaining device related to an example of the present embodiment

### DETAILED DESCRIPTION OF PREFERRED EMBODIMENTS

As described in the background of the invention, the information browsing device such as the electronic paper is popular and used in a variety of forms. However there is no the retaining device to retain the information browsing device in conjunction with the processing apparatus such as the image forming apparatus, and there was a problem that the information browsing device provided with the display section cannot be retained efficiently.

Therefore, in an embodiment of the present invention, a retaining device at which one or more image browsing devices are plugged and unplugged is disposed and fixed at a main body or accessory of a processing apparatus such as an image forming apparatus, and the display section is made visible from a front side of display section while the information browsing device is being retained. Also, various information transmitted from the processing apparatus is allowed to be displayed on the display section of a front information browsing device visible from the user among the information browsing devices retained.

### [Example]

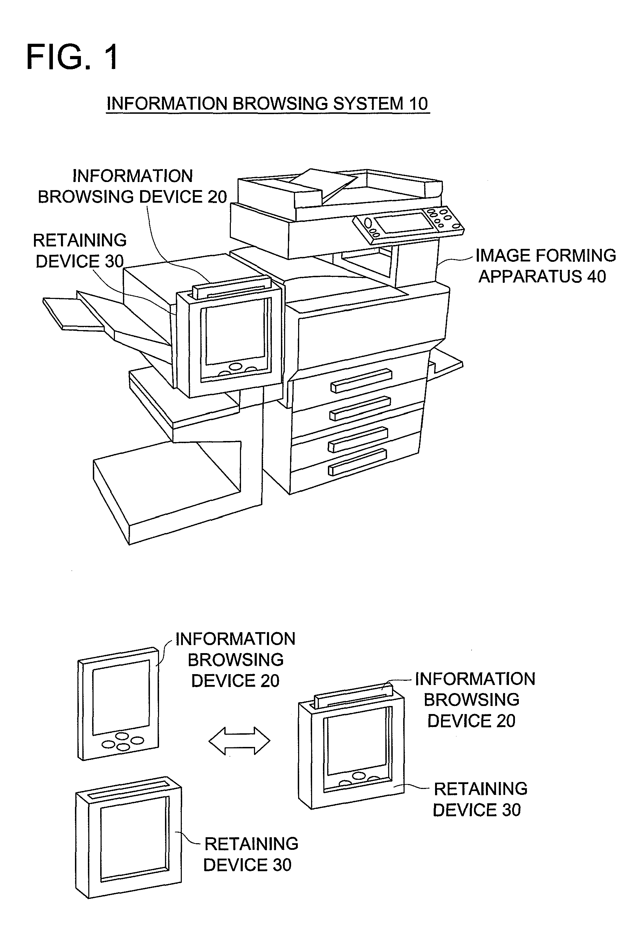

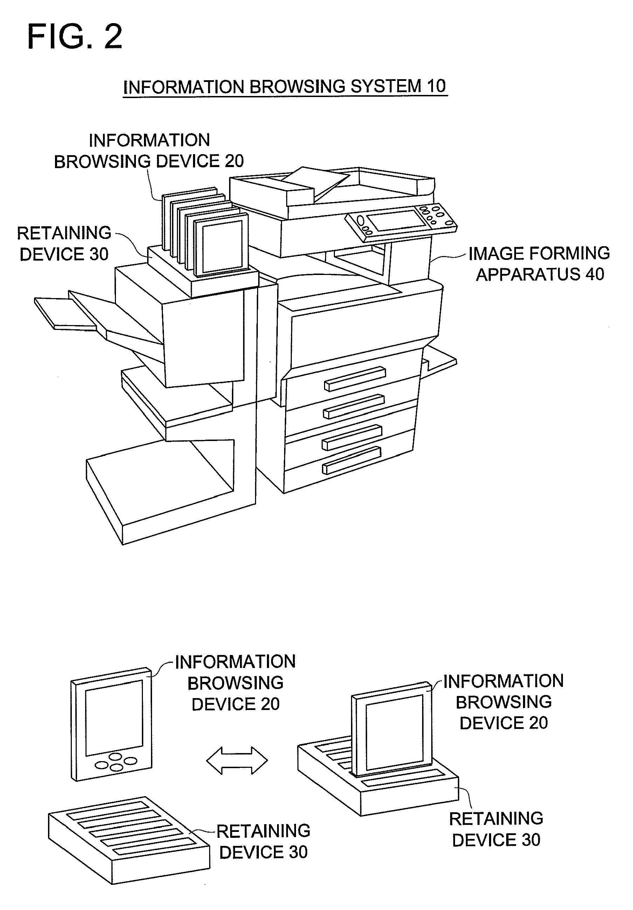

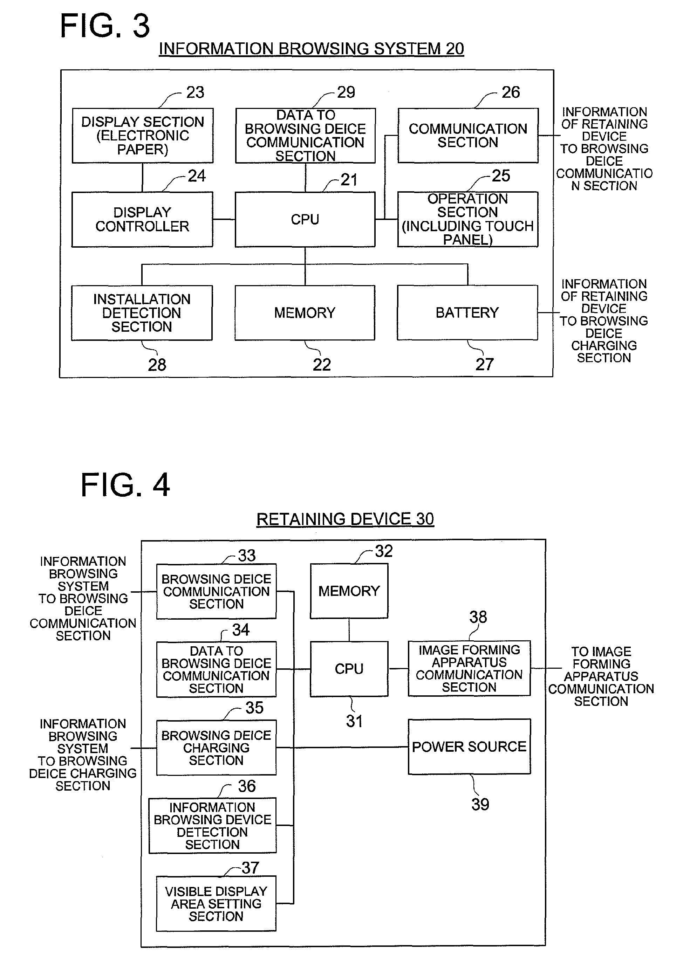

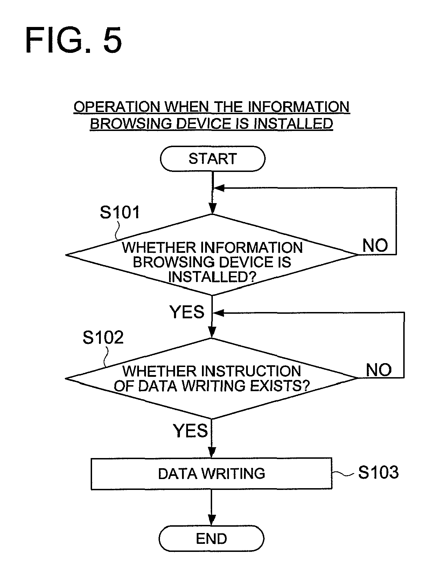

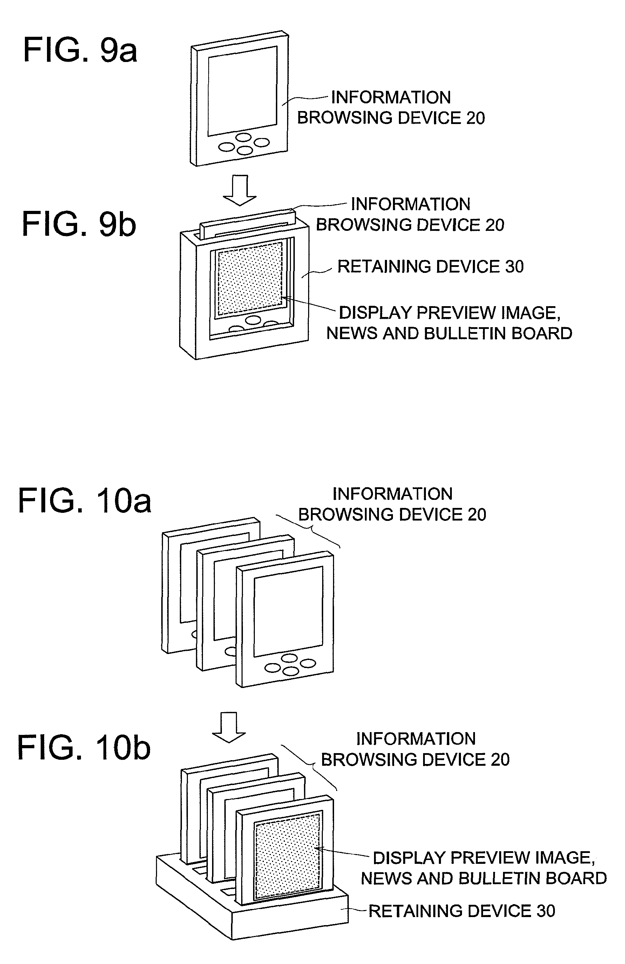

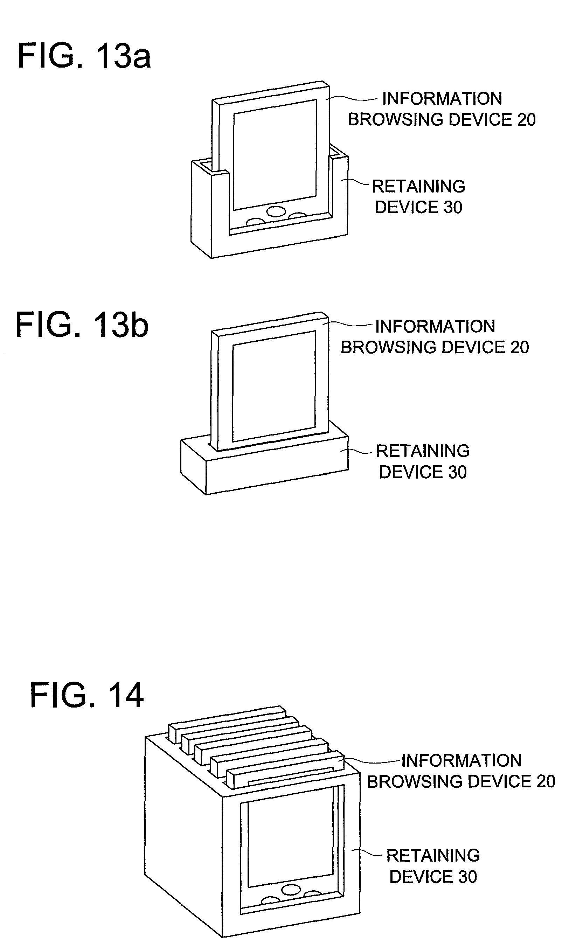

The retaining device of the information browsing device and the display control method related to the example of the present embodiment will be described with reference to Fig. 1 to Fig. 14 so as to described the example of the present embodiment in the forgoing further specifically. Fig. 1 and Fig. 2 are perspective views schematically showing a configuration of the information browsing system of the present example, Fig. 3 is a block diagram showing a configuration of the information browsing device, and Fig. 4 is a block diagram showing a configuration of the retaining device. Also, Fig. 5 to Fig 8 are flow charts showing operations of the information browsing system of the present example, and Fig. 9 to Fig. 12 are perspective views schematically showing operations when the information browsing device is unplugged. Further, Fig. 13a,13b and Fig.14 are perspective views showing other configurations of the retaining devices of the present example.

As Fig. 1 shows, an information browsing system 10 of the present example is configured with a processing apparatus (in the present example, an image forming apparatus 40 to process the print data) to process the electronic data, a retaining device 30 to be provided at the image forming apparatus 40 and an information browsing device 20 to be retained by the retaining device 30 in a detachable manner.

Incidentally, in the present example, the image forming apparatus 40 will be cited as the processing apparatus, though the processing apparatus can be any apparatus to handle electric data to be displayed on the information browsing device 20, for example, a computer apparatus.

Also, in Fig. 1, while the retaining device 30 is configured to retain one piece of the information browsing device 20 in the detachable manner, as Fig. 2 shows, there can be a configuration to retain a plurality the information browsing devices 20 the detachable manner. Each device will be specifically described as follow.

### [Information Browsing Device]

The information browsing device 20 is a device such as an electronic paper, an electronic book and a slimline computer device provided with a display device and as Fig. 3 shows, a CPU (Central Processing Unit) 21, a memory 22, a display section (electronic paper) 23, a display controller 24, an operation section (touch panel) 25, a communication section 26, a battery 27, an installation detection section 48, a data decoding section 29 and so forth.

The CPU 21 executes various programs read out from the memory 22 to control operation of each section. The memory 22 is configured with a ROM (Read Only Memory) and a RAM (Random Access Memory) to store
various data such as various programs to be operated by the CPU, setting information to control operation of the information browsing device 20 and electronic data to be displayed on the display section 23. The control section is configured with the CPU 21 and the memory 22.

The display section 23 is configured with an electronic paper (EPD: Electrophoretic Display), a LCD (Liquid Crystal display) or an organic EL (Electroluminescence) display device to display document such as materials for a meeting, a preview image, delivered information such as news and a bulletin board and device information to indicate conditions of the image forming apparatus 40.

A display controller 24 drives the display section 23 to control displaying and deleting of the above information.

The control section 25 is buttons, switches or a pressure-sensitive touch panel where transparent electrodes are disposed in a reticular pattern on a display section 23. In the touch panel, a X-Y coordinate of a pressure point pressed by a finger or a touch pen is detected via a voltage value, and the detected position signal is outputted to the CPU 21 as an operation signal.

The communication section 26 is an interface to connect with the retaining device 30 which establishes communication with the retaining device 30 via wired or wireless communication, infrared ray communication or Bluetooth™.

The battery 27, charged by electronic power supplied from an information browsing device charging section of the retaining section 30, supplies electric power to drive each section of the information browsing device 20.

An plugging detection section 28 detects that the information browsing deice 20 is plugged on the retaining device 30. The detection method is, for example, a method to detect whether or not the battery 27 and the information browsing device charging section of the retaining device 30 is connected, a method to detect whether or not an electrode disposed at the information browsing device 20 and an electrode disposed at the retaining device 30 are connected electrically, or a method to detect "make or break" of an electric contact points disposed at a bottom of the information browsing device 20 which makes and breaks by the it's own weight without the method being limited thereto. Also, in case the inferred ray communication device is provided in the communication section 26, to which slot each terminal is connected is detected by shearing the infrared ray communication.

The data decoding section 29 decodes an electronic data into data capable of being displayed on the display section 23, in case of the electronic data transmitted from the image forming apparatus 40 via the retaining device 30 has been encoded.

Incidentally, in Fig. 3, the display controller 24, plugging detection section 28, and the data decoding section 29 are hardware, however they can be realized by programs executed by the control section (CPU 21).

### [Retaining Device]

The retaining device 30 is provided with a mechanism to retain the information browsing device 20, a function to conduct data communication with the information browsing device 20, and a function to charge the battery 27 of the information browsing device 20 as needed. The retaining device 30 is fixed at the main body or an accessory (for example, sheet feeding section or post-processing section separated form the main body) of the image forming apparatus 40.

The retaining device 30 is configured to allow the information browsing device 30 to be plugged and unplugged. For example, the retaining device 30 to retain the one piece of the information browsing device 20 is configured with a frame member shown by Fig. 1, which is provided with an opening section to be able to observe squarely a portion of or whole of the display section 23 of the information browsing device 20 (from a direction perpendicular to the display surface of the display section 23) in an plugged state. The form of the above retaining device 30 can be, for example, as Fig. 13a shows, a configuration to retain only a lower portion of the information browsing device 20, or as Fig. 13b shows a configuration having a structure in a shape of a rectangular parallelepiped provided with slots without being limited to Fig.1. Also, the opening section can be altered in accordance with the shape of the display section 23 of the information browsing device 20. A transparent protection member (glass or plastic) can be plugged at the opening section to protect the display section 23 of the information browsing device 20.

Also, as Fig. 2 shows, the retaining device 30 to retain a plurality of the information browsing device 20 is provided with a plurality of the slots on the structure in the shape of the rectangular parallelepiped. Each slot has a depth to enable the portion or while of the display section 23 of the information browsing device 20 to be observed squarely in the state that the information browsing device 20 is plugged. The form of the above retaining device 30 can be a structure where a plurality of the same frame members as in Fig. 1 are attacked or a structure to obliquely retain the plurality of the information browsing device 20 without being limited to Fig. 2. Also, in Fig. 2 and Fig.14, while the plurality of the information browsing device 20 are in the same from, the form of the information browsing device can be differ among the information browsing devices 20, and there can be a structure where the form of the slots can be changed to retain the information browsing devices 20 having different forms.

As Fig. 4 shows, the above retaining device 30 is provided with a CPU 31, a memory 32, an information browsing device communication section 33, a data encoding section 34, an information browsing device charging section 35, an information browsing device detection section 36, a visible display area setting section 37, an image forming apparatus communication section 38 and a power source 39.

The CPU 31 executes various programs read out from the memory 32 to control operation of each section. The memory 32 configured with a ROM and a RAM stores various programs to be operated by the CPU 31, setting information to control operation of the retaining device 30, and various kinds of data such as electronic data to be displayed on the information browsing device 20. The control section is configured with the CPU 31 and the memory 32.

The information browsing device communication section 33 is an interface to connect one or a plurality of the information browsing devices 20 and to establish communication of each information browsing device 20 using wired or wireless communication, infrared communication and Bluetooth™.

The data encoding section 34 decodes the electronic data acquired from the image forming apparatus 40 as needed.

The information browsing device charging section 35 supplies electric power of the power source 39 to one or more batteries 27 of the information browsing devices 20 to charge the batteries 27.

The information browsing device detection section 36, detects installation of the information browsing device 20 and specifies an information browsing device 20 visible from the front squarely, namely an information browsing device 20 plugged at the front in case a plurality of the information browsing devices 20 are plugged. The method of detecting installation or the position of the information browsing device 20 is, for example, a method to detect whether or not information browsing device charging section 35 and the battery 27 of the information browsing device 20, a method to detect whether or not an electrode disposed at each slot of the retaining device 30 and an electrode disposed at the information browsing device 20 are connected electrically, or a method to detect "make and brake" of an electric contact point which makes and breaks by the it's own weight, disposed at a bottom of each slot of the retaining device 30, without the method being limited thereto.

The visible display area setting section 37 is to set an area of the display section 23 of the information browsing device 20 exposing from the retaining device 30 based on structures of the information browsing device 20 and the retaining device 30. For example, in case of the structure in Fig.1, the area not interrupted by the frame member of the retaining device 30 is set, and in case of the structure in Fig. 2, an area not concealed by the retaining device 30 is set.

The image forming apparatus communication section 38 is an interface to connect the image forming apparatus 40 and establish communication with the image forming apparatus 40 via wired or wireless communication, infrared ray communication or Bluetooth™.

The power source 39 is to supply electric power to drive each section of the retaining device 30.

Meanwhile, in Fig. 4 while the data encoding section 34, the information browsing device detection section 36 and the visible display area setting section 37 are hardware, they can be configured by programs executed by the control section (CPU31).

### [Image Forming Apparatus]

An image forming apparatus 40 representing an example of the processing apparatus is provided with, for example, a control section, a communication section, an ADF (Automatic Document Feeder), an image reading section, a display section, an operation section, a sheet feeding section, a printing section and a post-processing section.

The control section is configured with a CPU and a memory such as a ROM and a RAM. The control section controls the printing section to print based on image data read via the image reading section or print data acquired from a computer device connected via a communication network. Also, the control section transmits the above print data, image data, a preview image, delivered information such as news and a bulletin board and apparatus information indicating statuses of the image forming apparatus 40 to the retaining device 30 via the communication section.

The communication section is an interface to connect the retaining device 30 and establish communication with the retaining device 30 via wired or wireless communication, infrared ray communication or Bluetooth™.

The ADF automatically conveys one or more document sheets to the image reading section.

The image reading section to optically read image data from the document sheet on the document table, is configured with a light source by which the document is scanned, a CCD (Charged Coupled Devices) image sensor to convert light reflected by the document into an electric signal and an AD converter to carry out A/D conversion of the electric signal.

The display section is configured with a liquid crystal display device or an organic EL display device to display various screens for operating the image forming apparatus 40. The operation section is configured with buttons and switches to conduct various settings and instructions. Incidentally, the display section and the operation section can be separate devices. Also the display section and the operation section can be an integrated device having a pressure sensitive operation section (touch panel) where transparent electrodes are arrange in a reticular pattern on an upper part of the display.

The sheet feeding section is configured with sheet trays to store various sizes of the sheets to send out the stored sheet to the printing section.

The printing section is configured with necessary elements for image forming utilizing an image forming process such as an electrophotographic method or an electrostatic recording method, for example, a photoconductive member, a transfer belt, a fixing device, various kinds of conveyance belts, so as to form an image on a designated sheet based on the print data or the image data and to send out the sheet to the post-processing section.

The post-processing section applies finishing process desired by the user such as punching, stapling and bookbinding in accordance with an instruction from the control section to the sheet conveyed form the printing section, and outputs the sheet

Incidentally, the image forming apparatus 40 has only to be provided with at least a function to conduct data communication with the retaining device 30 and a space to plug the retaining device 30 without the configuration thereof being restricted.

In Fig. 1 and Fig. 2 while the information browsing device 20, the retaining device 30 and the processing apparatus (image forming apparatus 40) are called information browsing system 10 all together, there can be provided a data provision device to provide electronic data to the processing apparatus (for example, a computer device to transmit the print data described in PDL (Page description Language) such as PCL (Printer control Language) and PS (Post Script) to the image forming apparatus 40), and an intermediary device to connect the information browsing device 20 with the retaining device 30 or the processing apparatus via a communication network.

Next, operation of the information browsing system 10 having the aforesaid configuration (in particular operation of the retaining device 30) will be described.

First, basic operation of the retaining device 30 (operation when the information browsing device 20 is plugged) will be described with reference to a flow chart in Fig. 5.

The information browsing device detection section 36 of the retaining device 30 observes installation of the information browsing device 20. When the information browsing device 20 is plugged (S101;Yes), the control section judges whether or not an instruction of writing electronic data from the image forming apparatus 40 exists (or whether or not the electronic data acquired from the image forming apparatus 40 is stored in the memory 32)(S102).

If the instruction of writing the electronic data exists (or the electronic data is stored), the control section transmits the electronic data to the plugged information browsing device 20 via the information browsing device communication section 33.

On the other hand, the information browsing device 20 receives the electronic data via the communication section 26 and the electronic data is stored in the memory 22. In case display of the electronic data is instructed by the operation section 25, the electronic data is decoded as needed by the data decoding section 29 and the display controller 24 controls the display section 23 to display the document of the electronic data.

Whereby, since the user can instruct whether the material of the meeting are outputted as a paper medium or the material is browsed via information browsing device 20 through the image forming apparatus 40, time and labor to transmit the electronic data from his computer device to the information browsing device 20 can be saved and usability can be improved.

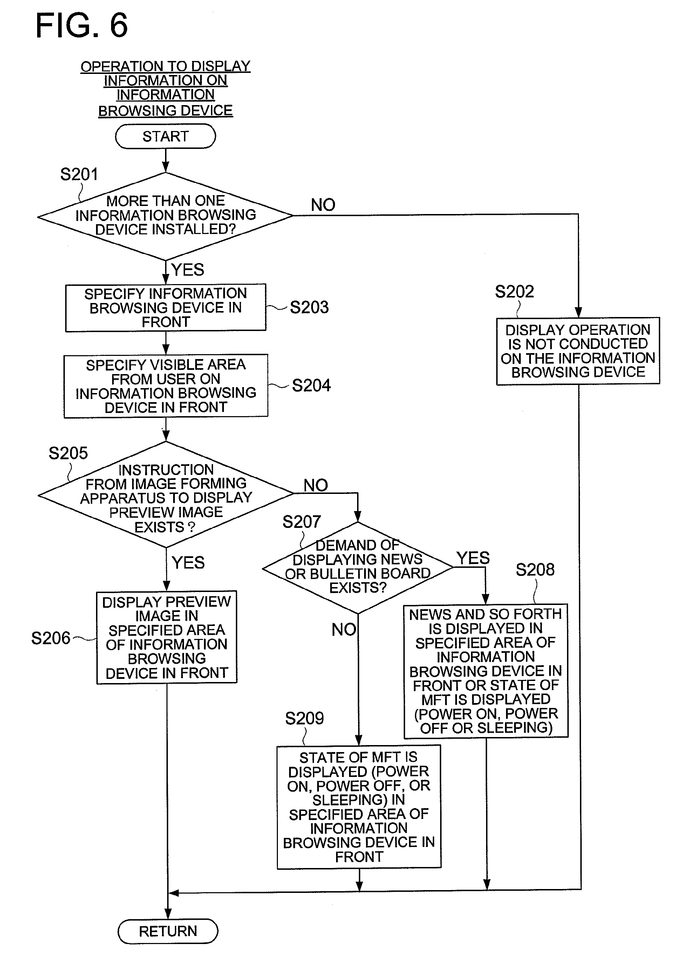

Next, operation of the retaining device 30 to display various information on the display 23 of the information browsing device 20 will be described with reference to flow charts in Figs. 6, 9 and a schematic diagram in Fig. 10.

First, the information browsing device detection section 36 of the retaining device 30 confirms whether or not the information browsing device 20 plugged in the retaining device 30 exists by checking, for example, if the information browsing device 20 capable of communicating via information browsing device communication section 33 exists or if the information browsing device 20 capable of being charged by the information browsing device charging section 35 exists (S201).

In case the no information browsing device 20 is plugged, the control section informs the image forming apparatus 40 that the information browsing device 20 is not plugged in the retaining device 30 as needed without conducting display processing with respect to the information browsing device 20 (S202).

On the other hand, in case one or more information browsing devices 20 are plugged, the information browsing device detection section 36 designates a visible information browsing device 20 for the user, namely an information browsing device 20 in the front (S203). Incidentally, in case the retaining device 30 capable of retaining only one information browsing device 20 is used, the aforesaid step can be omitted.

Next, the control section specifies an area of the designated information browsing device 20 visible from the user as needed,based on the setting information of the visible display area setting section 37 (S204).

Next, the control section judges whether or not a preview instruction from the image forming apparatus 40 exists (S205). The preview display instruction is to display an image based on the print data or an image read by the image reading section on a screen for verification.

In case the preview display instruction exists, the control section transmits a preview image to the information browsing device 20 in the front designated in step S203, and the information browsing device 20 receives the preview image, then the display controller 24 controls the display section 23 to display (in the designated area of the display section 23 in case the display area is designated in step S204) (S206).

On the other hand, in case the preview display instruction does not exist, the control section judges whether or not a display instruction of the delivered information such as news and the bulletin board exists (S207). The delivered information such as news and the bulletin board are displayed to improve usage for the user. In the present example, the delivered information can be notified effectively using the display section 23 of the information browsing device 20 plugged in the retaining device 30.

In case the display instruction of the delivered information exists, the control section transmits the delivered information such as new and the bulletin board to the information browsing device 20 in the front designated in step S203, and the display controller 24 controls the display section 23 to display the delivered information (in the designated area of the display section 23 in case the display area is designated in step S204) (S208). When this occurs, in addition to the above delivered information, the device information to indicate state of the image forming apparatus 40 (such as "power on", "power off", "sleeping", "printing", "standby", " fax message receiving", "print job queued" is transmitted and displayed on information browsing device 20 so as to improve convenience for the user.

On the other hand, in case the display instruction does not exist, the control section transmits nothing or the above device information to the information browsing device 20 in the front designated in step S203. The information browsing device 20 receives the device information and the display controller 24 controls the display section 23 to display the device information (in the designated area of the display section 23 in case the display area is designated in step S204) (S209).

Fig. 9 and Fig.10 schematically show the above control. Nothing is displayed on the display section 23 of the information browsing device 20 before being plugged in the retaining device 30. When the information browsing device 20 is plugged in the retaining device 30, the preview image, the delivered information and the device information are displayed on the display section 23. Then by unplugging the information browsing device 20 from the retaining device 30, the display controller 24 eliminates the above information from the display section 23 and when displaying of a document such as the material of the meeting is instructed, the document is displayed on the display section 23.

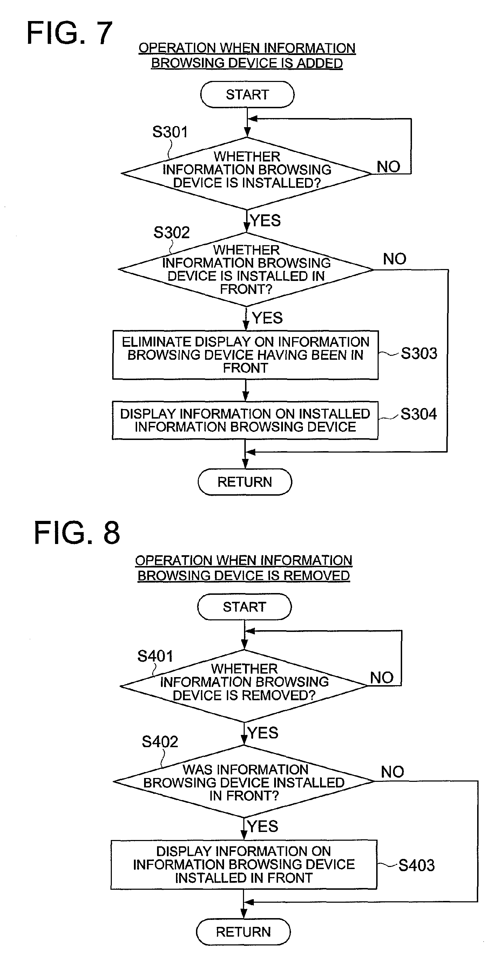

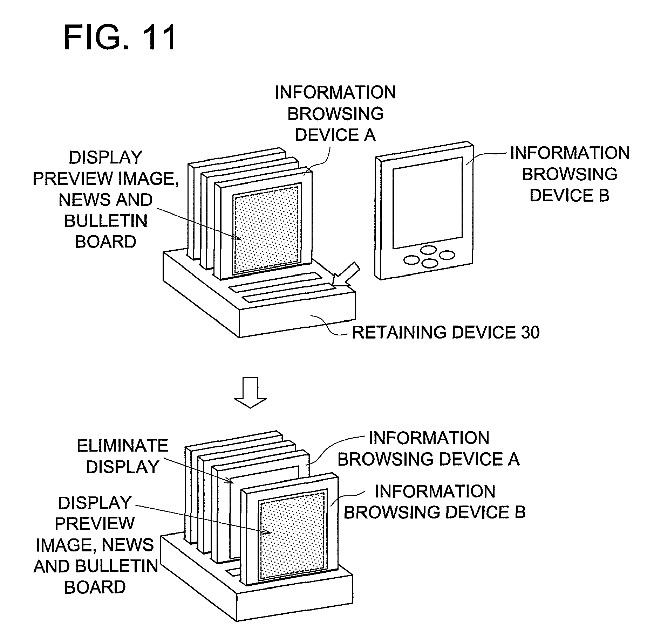

Next, operation of the retaining device 30 when the information browsing device 20 is added will be described with reference to the flow chart in Fig. 7 and the schematic diagram in Fig.11. Incidentally, in accordance with the aforesaid flow chart, the preview image, the delivered information and the device information are supposed to be displayed on the information browsing device 20 in the front (information browsing device A).

In the above state, the information browsing device detection section 36 of the retaining device 30 observes whether or not a new information browsing device 20 is plugged (S301), and in case the new information browsing device 20 is plugged, whether or not the new information browsing device 20 is plugged in the front is judged (S302).

In case the information browsing device 20 is not plugged in the front, processing is terminated without proceeding (while the preview image, delivered information and the device information remain are kept to be displayed on the information browsing device 20 in the front).

On the other hand, in case the information browsing device 20 is plugged in the front, the control section instruct the information browsing device 20 (information browsing device A) in the front to cease displaying, and the display controller 24 of information browsing device A controls the display section 23 to cease displaying (S303). The control section transmits the preview image, the delivered information and the device information to the newly plugged information browsing device 20 (information browsing device B), and the display controller 24 of the information browsing device B controls the display section 23 to display the above information (S304).

Fig.11 schematically shows the above control. Before the new information browsing device 20 (information browsing device B) is added, the preview image, the delivered information and the device information are displayed on the display section 23 of the information browsing device 20 (information browsing device A) in the front. When the new information browsing device 20 (information browsing device B) is plugged, the information browsing device A ceases displaying and the preview image, the delivered information and the device information are displayed on the display section 23 of the information browsing device B.

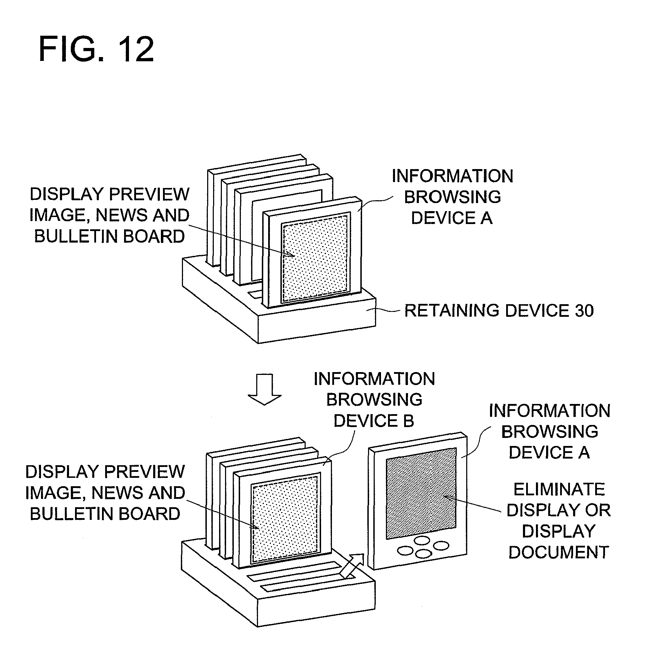

Next, operation of the retaining device 30 when the information browsing device 20 is unplugged will be described with reference to the flow chart in Fig. 8 and a schematic diagram in Fig. 12. Incidentally, in the following description, the preview image, the delivered information and the device information are supposed to be displayed on the information browsing device 20 (information browsing device A) in the front

In the above condition, the information browsing device detection section 36 of the retaining device 30 observes whether or not the information browsing device 20 is unplugged (S401) and in case the information browsing device 20 is unplugged, whether or not the unplugged information browsing device 20 was plugged in the front (information browsing device A) is judged (S402).

In case the unplugged information browsing device 20 was not plugged in the front, the process terminates without proceeding (while the preview image, the delivered information and the device information remain displayed on information browsing device 20 in the front).

On the other hand, in case the unplugged information browsing device 20 was plugged in the front, the control section transmits the preview image, the delivered information and the device information to the information browsing device 20 (information browsing device B) and the display controller 24 of the information browsing device B controls the display section 23 to display the above information (S403). Also, the display controller 24 of unplugged information browsing device A eliminates display from the display section 23 (or displays a document).

Fig. 12 shows the above control schematically. Before the information browsing device 20 in the front (information browsing device A) is unplugged, the preview image, the delivered information and the device information are displayed on the display section 23 of aforesaid the information browsing device 20, however when the information browsing device 20 in the front (information browsing device A) is unplugged, the display on the information browsing device A is eliminated and the preview image, the delivered information and the device information are displayed on the display section 23 of the information browsing device B.

As above, the control section of the retaining device 30 observes plugging and unplugging of the information browsing device 20, and even if the information browsing device 20 visible from the user is changed, the preview image, the delivered information and the device information can be always observed by conducting control to display information on the information browsing device 20 has become front, even in case a plurality of the information browsing devices 20 are plugged, and usability for the user is improved.

The embodiments have been described, by way of example only, without the present invention being limited thereto, and it is to be understood that changes and variations may be made without departing from the spirit or scope of the appended claims. For example, in the above examples, while the information browsing device 20 is plugged longitudinally so that the display section 23 locates at an upper part, the information browsing device 20 can be plugged so that the display section 23 locate at a lower part, or the information browsing device 20 can be plugged laterally, or lateral installation and longitudinal installation can be mixed. Also, the retaining device 30 can be fixed onto the image forming apparatus 40, or can be engaged or placed on a projection provided at the image forming apparatus 40.

The present invention can be applied to the information browsing device such as the electronic paper, the retaining device to retain the one or more information browsing device and a system including a processing apparatus provided with the retaining device.

According to the retaining device of the information browsing device and the display control method of the present invention, the information browsing device can be retained with an excellent visibility in conjunction with the electronic data processing apparatus.

Because, the retaining device to retain the information browsing device in the detachable manner is fixed on the main body or the accessory of the processing apparatus such as the image forming apparatus to process the electronic data, and the information browsing device is retained so that the portion or the whole display section can be observed squarely from the front in a state that the information browsing device is plugged.

Also, because the retaining device controls to display useful information such as the document, the preview image, the delivered information such as news and bulleting board and the device information to indicate conditions of the processing apparatus on the display section of the information browsing device in the front even in case the installation conditions of the information browsing device have changed.

## Claims

1. A retaining device, comprising:
a structure to retain one or a plurality of information browsing devices having a display section and
a control section,
wherein the structure is fixed onto a main body or an accessory of a processing apparatus to process a document to be displayed on the information browsing device, and configured in a way that at least a portion of the display section of the information browsing device retained by the structure so as to locate in a front can be seen squarely from a front of the display section.

2. The retaining device of claim 1, wherein the control section acquires specific information from the processing apparatus and allows the display section of the information browsing device, retained by the structure so as to locate in the front to display the specific information.

3. The retaining device of claim 2, wherein the specific information includes at least a preview image of the document, device information to indicate a condition of the processing apparatus or delivered information to be delivered to the processing apparatus.

4. A display control method using a retaining device to detachably retain one or a plurality of information browsing devices having a display section, wherein the retaining device is fixed onto a main body or an accessory of a processing apparatus to process a document to be displayed on the information browsing device, comprising;
specifying the information browsing device, retained by the structure so as to locate in the front when viewing the display section from a front, by observing plugging and unplugging of the information browsing device via the retaining device in a first step and
displaying the specific information acquired from the processing apparatus on the display section of the information browsing device plugged in the front in a second step.

5. The display control method of claim 4, further comprising;
judging whether or not a new information browsing device is plugged in the front when viewing the display section from the front squarely in step 1, in case the new information browsing device is plugged, and
eliminating the specific information from the display section of the information browsing device having been plugged in the front and displaying the specific information on the display section of a newly plugged information browsing device in step 2 in case the newly plugged information browsing device is plugged in the front,
wherein the retaining device retains a plurality of the information browsing devices in a detachable manner.

6. The display control method of claim 4, further comprising;
judging whether or not a unplugged information browsing device has been in the front when viewing the display section from the front squarely in step 1 in case the information browsing device is unplugged, and
displaying the specific information on the display section of the information browsing device which became a front information browsing device in step 2 in case the unplugged information browsing device was in front.

7. The display control method of any one of claims 4 to 6, wherein the specific information includes at least a preview image of the document, device information to indicate a condition of the processing apparatus or delivered information to be delivered to the processing device.
